# EUROPEAN PATENT APPLICATION

(11) **EP 2 767 516 A1**
(43) Date of publication of application: **20.08.2014**
(21) Application number: 12840597.4
(22) Date of filing: 23.03.2012
(51) Int. Cl.: C02F 3/28, C02F 3/02, B01J 8/24

(54) **INTERNALLY CIRCULATING FLUIDIZED BED BIOREACTOR**

(30) Priority: 12.10.2011 CN 201120387408 U
(71) Applicant: Lin, Changqing, Taiwan (CN)
(72) Inventor: Lin, Changqing, Taiwan (CN)
(74) Representative: Gulde & Partner
(86) International application number: PCT/CN2012/072942
(87) International publication number: WO 2013/053217

(57) **Abstract**

The present invention provides an internal-circulating fluidized bed bioreactor, comprising: a reactor, a water groove, at least one three-phase separator, a gas collection tube, a backflow tube, a backflow pump and at least one circulating jet device, wherein the water groove is installed at the upper end of the reactor, the water groove is divided into an inner water groove and an outer water groove, the circulating jet device is installed in a reaction area in the reactor, the circulating jet device comprises an inner tube and an outer tube installed at the outer side of the inner tube in a sleeving manner, the upper end of the outer tube is connected with the inner water groove and provided with a plurality of inflowing gaps in the periphery thereof, the inner tube is connected with the water outlet port of the backflow pump by the backflow tube, the water inlet port of the backflow pump is connected with the outer water groove by the backflow tube, one three-phase separator is installed above each circulating jet device, the three-phase separator is used for guiding the separated gas in the gas collection tube, guiding the separated liquid in the outer water groove, and retaining the separated solid in the reactor; the reactor is capable of realizing the functions of high organic load, high treatment efficiency, impact load resistance, energy conservation, and stabile and good effluent quality, as well as capable of being used for anaerobic and aerobiotic treatments on organisms.

## Description

### Field of the Invention

The present invention relates to an organic sewage purification device, and in particular, relates to an internal-circulating fluidized bed bioreactor.

### Background of the Invention

Organic sewage is an inevitable product of the social life of human, and pollution to environment can be reduced only through effective treatment on organic sewage. Biotreatment methods for various types of organic sewage include anaerobic-type methods and aerobiotic-type method presently. Generally, aerobiotic treatment is applied to low-intensity organic sewage treatment, whereas anaerobic treatment is applied to high-intensity organic sewage treatment.

In the anaerobic biotreatment methods, an up-flow anaerobic sludge bed (UASB) has been the most successful anaerobic biotreatment process so far, but also has many shortages, for example, during running in a low-temperature condition or the initial stage of starting or treatment on low-concentration organic wastewater, a mixing effect in a reactor is bad because lots of marsh gas cannot be generated to cause enough perturbation, and thus a short flow occurs to cause a low treatment efficiency; and if the mixing condition is improved by increasing the hydraulic load of the reactor, the condition of sludge loss will occur.

The anaerobic fluidized bed reactor is provided with an enough up-flow speed, so that a sludge bed is in an overall fluidized state, thus ensuring adequate contact between anaerobic granular sludge and a matrix in sewage to achieve a good mass transfer effect and form a high biomass. Therefore, the reaction efficiency is high, the relative hydraulic retention time of the reactor is short, and the needed volume of the reactor is relatively reduced. However, a circulating water flow rate needed for forming a fluidized bed is high, relatively, the three-phase separation of the fluidized bed is difficult and requires high design and running level, therefore, the fluidized bed reactor is not applied in a large scale in production presently.

In the field of aerobic biological treatment, an activated sludge method and a biofilm method are included in general, wherein the biofilm method has the advantages of relatively high biomass, no sludge bulking and stable running, and becomes a trend of the development of recent aerobic treatment. A common system comprises a biological aerated filter (BAF) and a moving bed biofilm reactor (MBBR) presently. An aerobic fluidized bed reactor needs high power consumption to achieve carrier fluidization, in addition, the uniform distribution of inflowing water is also a technical problem, so that the aerobic fluidized bed reactor is not widely used in the present actual applications although having the advantages of high efficiency and high load.

### Summary of the Invention

An object of the present invention is to provide a method for solving the problems aforementioned and for forming a reinforced fluidized bed bioreaction device by combining a UASB principle with a fluidized bed principle, wherein the reinforced fluidized bed bioreaction device can be applied to anaerobic and aerobiotic treatments to form an internal-circulating anaerobic fluidized bed bioreactor and an internal-circulating aerobiotic fluidized bed bioreactor, so as to realize the functions of high organic load, high treatment efficiency, impact load resistance, energy conservation and stabile and good effluent quality.

In order to realize the object of the present invention, the following technical scheme is adopted in the present invention:
the internal-circulating fluidized bed bioreactor of the present invention comprises a reactor, a water groove, at least one three-phase separator, a gas collection tube, a backflow tube, a backflow pump and at least one circulating jet device, wherein the water groove is installed at the upper end of the reactor, the water groove is divided into an inner water groove and an outer water groove, the circulating jet device is installed in a reaction area in the reactor, the circulating jet device comprises: an inner tube and an outer tube installed at the outer side of the inner tube in a sleeving manner, the upper end of the outer tube is connected with the inner water groove and provided with a plurality of inflowing gaps in the periphery thereof, the inner tube is connected with the water outlet port of the backflow pump by the backflow tube, the water inlet port of the backflow pump is connected with the outer water groove by the backflow tube, one three-phase separator is installed above each circulating jet device, the three-phase separator is used for guiding the separated gas in the gas collection tube, guiding the separated liquid in the outer water groove, and retaining the separated solid in the reactor;
according to the internal-circulating fluidized bed bioreactor of the present invention, wherein a gas inlet tube is installed at the connected part of the inner tube and the backflow tube, one end of the gas inlet tube is communicated with air, the other end of the gas inlet tube stretches into the inner tube, and a Venturi device is installed on the inner tube at the other end of the gas inlet tube;
according to the internal-circulating fluidized bed bioreactor of the present invention, wherein the outer tube is connected with the inner water groove by a water inlet port connection tube, the aperture of the outlet of the inner tube is 1/2-3/4 of the tube diameter of the inner tube; and the outlet of the outer tube is horn-shaped;
according to the internal-circulating fluidized bed bioreactor of the present invention, wherein the inner water groove is provided with a water inlet port, the outer water groove is provided with a water outlet port and a water outlet hole, inflowing water is drained in the inner water groove from the water inlet tube and then flows in the water inlet connection tube, the liquid separated by the three-phase separator is guided in the outer water groove through the water outlet hole and drained out of the water groove from the water outlet port;
according to the internal-circulating fluidized bed bioreactor of the present invention, wherein the three-phase separator is composed of a conical cover and at least one pair of inclined plates which are mutually parallel in pairs, an angle formed between the two inclined plates and a horizontal direction is basically equal to an angle formed between the conical cover and the horizontal direction, and is 45-65 degrees, a sealed air chamber is formed at the upper end of the conical cover, and a gas is discharged from a gas exhaust tube to the gas collection tube;
according to the internal-circulating fluidized bed bioreactor of the present invention, wherein the three-phase separator is composed of a conical cover and a plurality of inclined plates, an angle formed between the inclined lower end of the conical cover and a horizontal direction is 45-65 degrees, the inclined plates are installed in the conical cover and parallel to the inclined lower end of the conical cover, a sealed air chamber is formed at the upper end of the conical cover, and a gas is discharged from a gas exhaust tube to the gas collection tube;
according to the internal-circulating fluidized bed bioreactor of the present invention, wherein a plurality of turbulent-flow plates are installed at the inner side of each inclined plate, an inclination angle between the turbulent-flow plates and the horizontal direction is 20-30 degrees, the width of each turbulent-flow plate is not greater than 2/3 of the distance between the conical cover and the inclined plates, and the distance between every two turbulent-flow plates is 1/4-1/3 of the length of each inclined plate; and
according to the internal-circulating fluidized bed bioreactor of the present invention, wherein a gas-sealing block is installed in a reactor between two three-phase separators or/and between one three-phase separator and the wall of the reactor; and a flow-guiding block is installed in a reactor between the outlets of the two outer tubes or/and between the outlet of one outer tube and the wall of the reactor.

The internal-circulating fluidized bed bioreactor of the present invention comprises a lower-layer reaction area, a three-phase separation device and an upper-layer clarification area. A hydraulic internal-circulating jet device is arranged in the reaction area, a water body and biocarriers (or granular sludge) on the upper layer of the reaction area are sucked downwards with inflowing sewage simultaneously by virtue of a jet principle, so as to form hydraulic circulation in the reaction area. Due to the action of the hydraulic internal-circulating jet device, a backflow water amount needed for enabling the sludge bed to be in the fluidized state, in the method and device of the present invention can be saved by 40-60% relative to general fluidized bed reactors. In addition, due to the great reduction of the backflow water amount, the load of the three-phase separator is relatively reduced greatly, so that the elution of biological sludge can be effectively avoided, and the stable high biomass of the reactor can be ensured. According to the internal-circulating anaerobic fluidized bed bioreactor applied to anaerobic treatment, because inflowing sewage as well as treatment water and the biocarriers (or granular sludge) on the upper layer of the reaction area achieve an adequate contact stirring effect in the hydraulic internal-circulating jet device, the treatment efficiency of the system is obviously increased. The general UASB anaerobic treatment system is started in the case that the granular sludge is not planted, and sludge can enter in a stable running state in the form of granules in 3-6 months. Because of adequate stirring contact and an excellent solid-liquid separation efficiency, the system of the present invention is started in the case that granular sludge is not planted, and sludge can enter in a stable running state in the form of granules only in 1-3 months.

In particular, according to the internal-circulating aerobiotic fluidized bed bioreactor applied to aerobic treatment of the present invention, air is sucked in by virtue of a backflow hydraulic power, and adequate contact stirring among air, treatment water and the biocarriers is achieved in the hydraulic internal-circulating jet device, thus greatly increasing an oxygen dissolution efficiency, and achieving an energy-saving and efficient treatment effect.

Because of arrangement of the turbulent-flow plates, the three-phase separation device of the present invention is capable of generating a turbulent flow among the inclined plates to enable fine bio-basses in treatment water to be in adequate contact stirring, so as to form large granules settled to the reaction area from the gaps between the gas-sealing blocks and the inclined plates, thus effectively avoiding the loss of biomass.

According to the internal-circulating aerobiotic fluidized bed bioreactor with the architecture of the method of the present invention, due to the architecture with the three-phase separator, the gas exhausted by aeration is exhausted by the gas exhaust pipeline, so that the problem of secondary air pollution caused by general aerobiotic reactors can be avoided.

The internal-circulating fluidized bed bioreactors of the present invention can be connected in series to form a multi-phase bioreactor, and because the water inflowing method of the reactors is sucking in by the internal-circulating jet device, the reactors in various sections do not have a water level difference.

### Brief Description of the Drawings

Fig. 1 is a schematic diagram of the internal-circulating fluidized bed bioreactor of the first embodiment of the present invention, which is a schematic diagram of an internal-circulating anaerobic fluidized bed bioreactor;
Fig. 2 is a schematic diagram of the internal-circulating fluidized bed bioreactor of the second embodiment of the present invention, and is a schematic diagram of an internal-circulating aerobiotic fluidized bed bioreactor;
Fig. 3 is a right schematic diagram of an internal-circulating jet device in the internal-circulating fluidized bed bioreactor of the present invention;
Fig. 4 is a schematic diagram of another form of a three-phase separator in the internal-circulating fluidized bed bioreactor of the present invention;
Fig. 5 is a top view of the internal-circulating fluidized bed bioreactor of the present invention; and
Fig. 6 is a schematic diagram showing the two-phase series connection of the internal-circulating fluidized bed bioreactor of the present invention.

Reference numerals in the figures are as follows: 1. reactor; 2. gas-sealing block; 3. three-phase separator; 4. water inlet groove; 5. inner water groove; 6. outer water groove; 7. water outlet hole; 8. water inlet port; 9. water outlet port; 10. backflow tube; 11. backflow pump; 12. flow-guiding block; 13. internal-circulating jet device; 14. inflowing gap; 15. inner tube; 16. water inlet connection tube; 17. gas collection tube; 18. Venturi device; 19. gas inlet tube; 20. turbulent-flow plate; 21. gas exhaust tube; 22. outer tube; 23. conical cover; 24. inclined plate; 25. biocarrier; 26. reaction area; 27. clarification area

In order to further illustrate the present invention, more detailed illustration is made below in conjunction with embodiments.

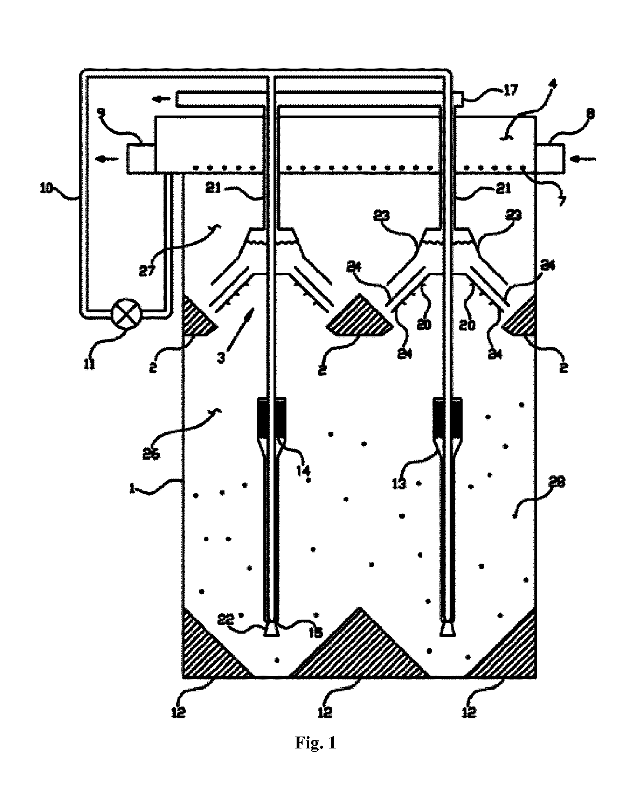

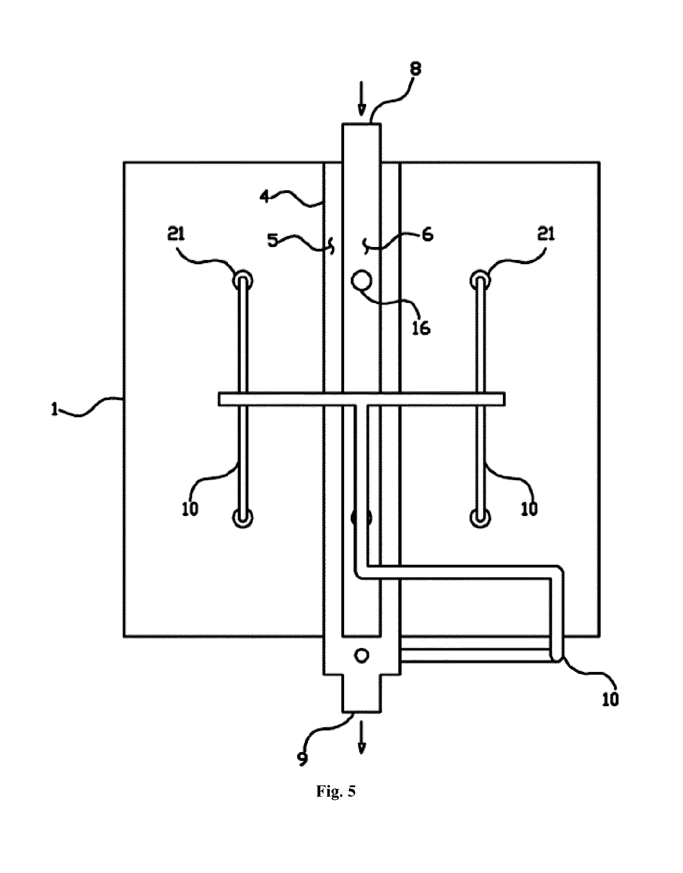

As shown in Figs. 1, 3 and 5 in the schematic diagrams of the internal-circulating fluidized bed bioreactor of the present invention, the internal-circulating fluidized bed bioreactor comprises: a reactor 1, a water groove 4, at least one three-phase separator 3, a gas collection tube 17, a backflow tube 10, a backflow pump 11 and at least one circulating jet device 13, wherein the water groove 4 is installed at the upper end of the reactor 1, the water groove 4 is divided into an inner water groove 5 and an outer water groove 6, the inner water groove 6 is provided with a water inlet port 8, and the outer water groove 5 is provided with a water outlet port 9 and a water outlet hole 7. The circulating jet device 13 is installed in a reaction area 26 in the reactor 1, the circulating jet device 13 comprises: an inner tube 15 and an outer tube 22 installed at the outer side of the inner tube 15 in a sleeving manner, the upper end of the outer tube 22 is connected with the inner water groove 6 by a water inlet connection tube 16 and provided with a plurality of inflowing gaps 14 in the periphery thereof, the inner tube 15 is connected with the water outlet port of the backflow pump 11 by the backflow tube 10, the water inlet port of the backflow pump 11 is connected with the outer water groove 5 by the backflow tube 10, one three-phase separator 3 is installed above each circulating jet device 13, the gas separated by the three-phase separator 3 is guided in the gas collection tube 17 through the gas exhaust tube 21, the separated liquid is guided in the outer water groove 5 through the water outlet hole 7 and drained out of the water groove 4 from the water outlet port 9, and the separated solid is retained in the reactor 1.

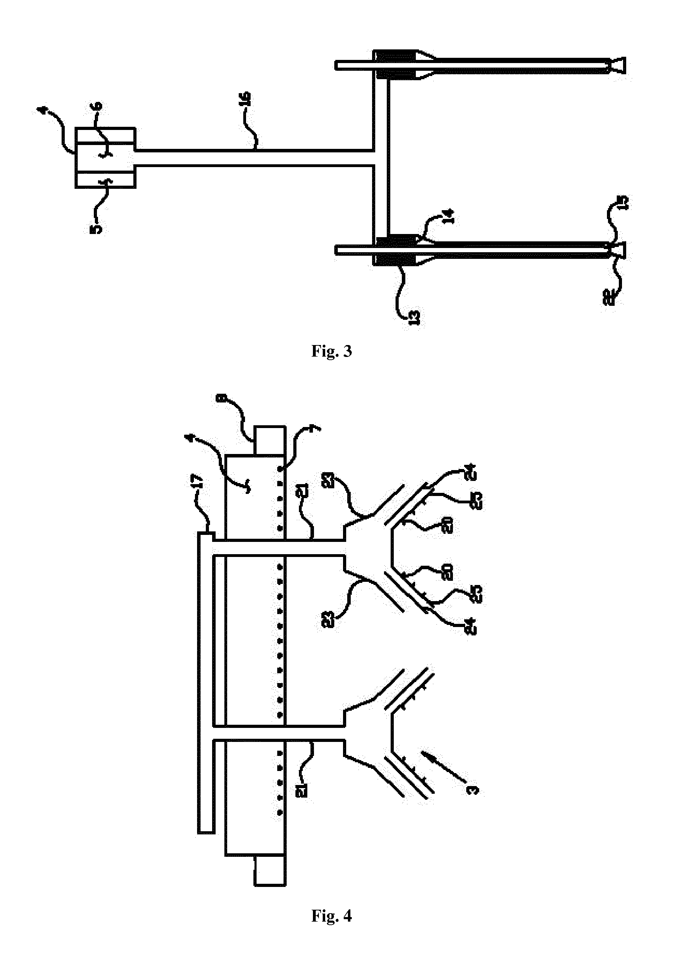

As shown in Fig. 1, the aperture of the outlet of the inner tube 15 is 1/2-3/4 of the tube diameter of the inner tube 15; and the outlet of the outer tube 22 is horn-shaped. As shown in Figs. 1 and 4, the three-phase separator 3 is composed of a conical cover 23 and at least one pair of inclined plates 24, an angle formed between the two inclined plates 24 and a horizontal direction is basically equal to that formed between the conical cover 23 and the horizontal direction, and is 45-65 degrees, a sealed air chamber is formed at the upper end of the conical cover 23, and a gas is discharged from the gas exhaust tube 21 to the gas collection tube 17. A plurality of turbulent-flow plates 20 are installed at the inner side of each inclined plate 24, an inclination angle between the turbulent-flow plates 20 and the horizontal direction is 20-30 degrees, the width of each turbulent-flow plate 20 is not greater than 2/3 of the distance between the conical cover 23 and the inclined plates 24, and the distance between every two turbulent-flow plates 20 is 1/4-1/3 of the length of each inclined plate 24. The inclined plates 24 and the turbulent-flow plates 20 form a turbulent flow to improve collision among the biocarriers or granular sludge, so as to desorb the gas on the biocarriers or granular sludge.

According to the size of the reactor, at least one circulating jet device 13 and at least one three-phase separator 3 are installed in the reactor 1. A gas-sealing block 2 is installed in a reactor 1 between two three-phase separators 3 or/and between one three-phase separator 3 and the wall of the reactor 1; and a flow-guiding block 12 is installed in a reactor 1 between the outlets of the two outer tubes 22 or/and between the outlet of one outer tube 22 and the wall of the reactor 1. The function of the flow-guiding block 12 lies in that the biocarriers in the reactor are fluidized better, thus reducing the ratio of dead areas. The outer edges of the inclined plates 24 of the three-phase separator and the gas-sealing block 2 are superposed to prevent the gas in the reaction area 26 from entering in the clarification area, thus achieving the purpose of gas-liquid separation.

The internal-circulating fluidized bed bioreactor is divided into an upper-layer clarification area 27 and a lower-layer reaction area 26 by the three-phase separator, and a hydraulic internal-circulating jet device 13 is arranged in the reaction area 26. Sewage enters in the reactor from the water inlet tube 8, and then flows in the water inlet connection tube 16 which is equivalent to a water inlet distribution tube, sewage is distributed to the bottom of the reactor 1 and flows upwards and through the three-phase separator 3, the liquid separated by the three-phase separator 3 is guided upwards in the outer water groove 6 through the water outlet hole 7 and drained out of the water groove 4 from the water outlet port 9; a water body between the inner tube 15 and the outer tube 22 is sucked out by a negative pressure generated by the drainage performed by the internal-circulating jet device 13 from the outlet of the inner tube 15 by virtue of a backflow hydraulic power, so that the liquid on the upper layer of the reaction area 26 and the carriers 25 or the granular sludge are sucked in a space between the inner tube and the outer tube of the internal-circulating jet device from the inflowing gaps 14, meanwhile, sewage in the sewage inlet connection tube 16 is mixed with the inflowing water sucked in the inflowing gaps 14, and then drained downwards and out from the outlet of the outer tube 22 through the space between the inner tube and the outer tube of the internal-circulating jet device 13, in this case, high-intensity hydraulic internal circulation in the reaction 26 and a bio-reaction area with an extremely low dead area percentage are formed. The sludge bed in the reaction area forms a fluidized state under the dual action of the backflow hydraulic power and the internal-circulating hydraulic power, and adequate stirring contact between the anaerobic granular sludge and the matrix is obtained, thus obtaining an efficient treatment efficiency.

### Embodiment 2

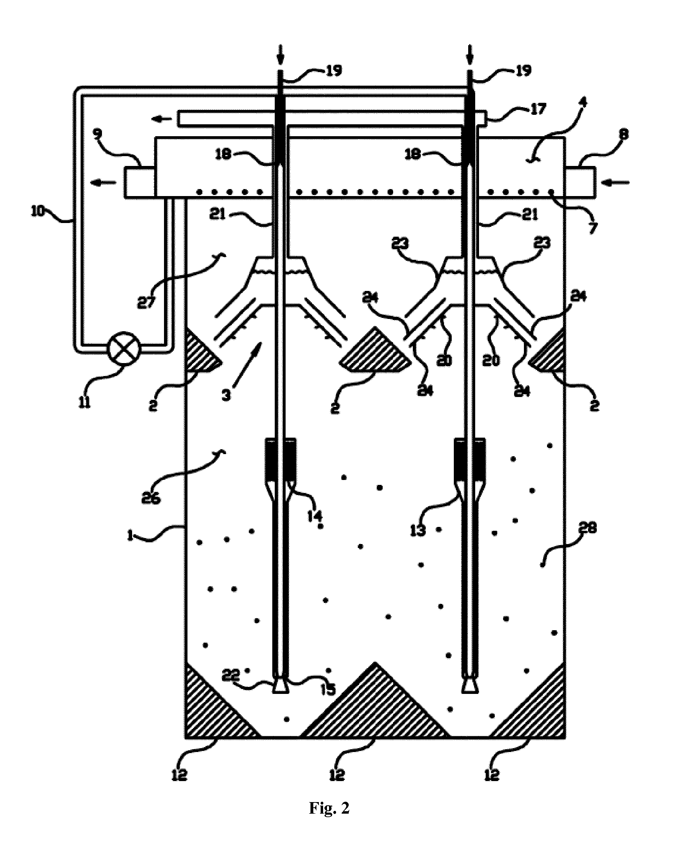

Fig. 2 is a schematic diagram of the internal-circulating aerobiotic fluidized bed bioreactor of the present invention. The schematic diagram is basically the same as embodiment 1, so the same parts are not described redundantly. The difference is that a gas inlet tube 19 is installed at the connected part of the inner tube 15 and the backflow tube 10, one end of the gas inlet tube 19 is communicated with air, the other end of the gas inlet tube stretches into the inner tube 15, and a Venturi device 18 is installed on the inner tube 15 at the other end of the gas inlet tube 19.

The internal-circulating aerobiotic fluidized bed bioreactor is divided into an upper-layer clarification area 27 and a lower-layer reaction area 26 by the three-phase separator, and a hydraulic internal-circulating jet device 13 is arranged in the reaction area 26. The effluent of the reactor flows back to the internal-circulating jet device 13 of the reactor through the backflow tube 10 by virtue of the backflow pump 11, a gas inlet tube 19 is installed at the connected part of the inner tube 15 and the backflow tube 10, one end of the gas inlet tube 19 is communicated with air, the other end of the gas inlet tube stretches into the inner tube 15, and a Venturi device 18 is installed on the inner tube 15 at the other end of the gas inlet tube 19, air is sucked in the gas inlet tube 19 by virtue of a backflow hydraulic power, mixed with backflow water and then enters in the internal-circulating jet device 13. Sewage enters in the reactor 1 from the water inlet tube 8, and then flows in the water inlet connection tube 16. A water body between the inner tube 15 and the outer tube 22 is sucked out by a negative pressure generated by the drainage performed by the internal-circulating jet device 13 from the outlet of the inner tube 15 by virtue of a backflow hydraulic power, so that the liquid on the upper layer of the reaction area 26 and the biocarriers 25 or the granular sludge is sucked in a space between the inner tube and the outer tube of the internal-circulating jet device 13 from the inflowing gaps 14, meanwhile, sewage in the sewage inlet connection tube 16 is mixed with the inflowing water of the inflowing gaps 14, and then drained downwards and out from the outlet of the outer tube 22 through the space between the inner tube and the outer tube of the internal-circulating jet device 13, in this case, high-intensity hydraulic internal circulation in the reaction 26 and a bio-reaction area with an extremely low dead area percentage are formed. When the backflow water mixed with air dissolved oxygen is drained from the inner tube 15 of the internal-circulating jet device, mixed solution containing the biocarriers between the inner tube 15 and the outer tube 22 is sucked out and subjected to adequate stirring and gas-liquid mixing, so that the biocarriers, the matrix and the dissolved oxygen achieve a good mass transfer efficiency. The sludge bed in the reaction area 26 forms a fluidized state under the dual action of the backflow hydraulic power and the internal-circulating hydraulic power, and adequate stirring contact between the biocarriers 25 and the matrix is obtained, thus obtaining efficient treatment efficiency.

The internal-circulating fluidized bed bioreactor can form an internal-circulating anaerobic fluidized bed bioreactor in an anaerobic operation condition, or form an aerobiotic reactor, when the internal-circulating fluidized bed bioreactor is applied to aerobiotic treatment, the Venturi device 18 and the gas inlet tube 19 are additionally installed in the middle of the backflow tube 10, air is sucked to achieve the function of aeration during the hydraulic circulation of effluent backflow, and the biocarriers (quartz sand, active carbon, zeolite and the like) are filled in the reactor to form the internal-circulating aerobiotic fluidized bed bioreactor; when the internal-circulating fluidized bed bioreactor is applied to aerobiotic treatment, the gas after aeration is exhausted by the gas exhaust tube 17, treatment can be carried out according to actual needs, and the problem of odour pollution generated by the direct emptying of the generally open aerobiotic treatment systems can be avoided; and the internal-circulating fluidized bed bioreactors can be connected in series to form a multi-phase bioreactor, and because the water inflowing method of the reactors is sucking in by the internal-circulating jet device 13, the reactors in various sections do not have a water level difference.

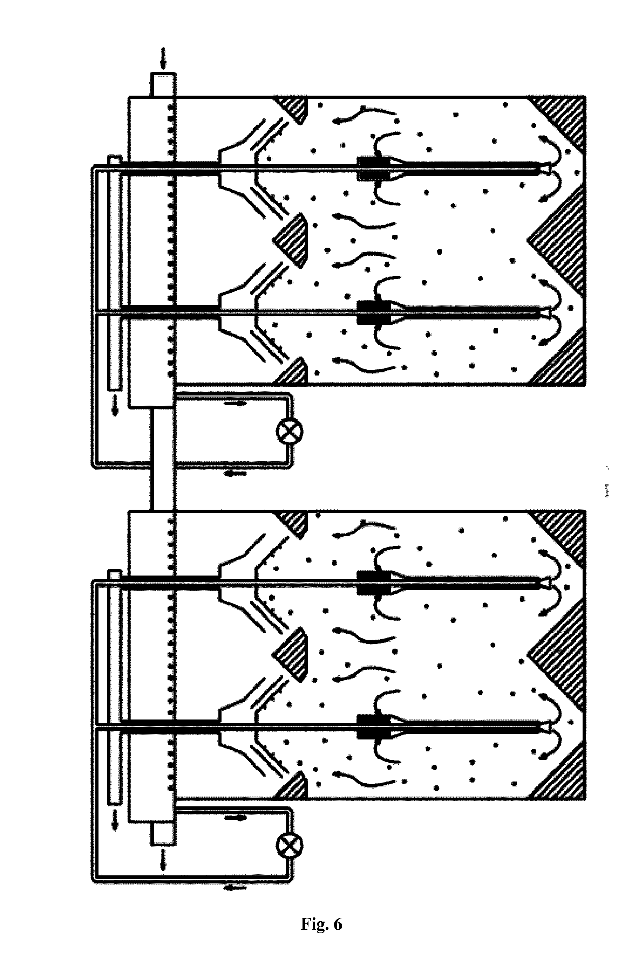

As shown in Fig. 6, the internal-circulating fluidized bed bioreactors of the present invention can be connected in series with two phases, the internal-circulating fluidized bed bioreactors of the present invention can be connected in series or connected in parallel, staged treatment is formed by series connection, a biochemical degradation process for organic matters is distributed and performed in different reaction chambers, thus contributing to the growth of different types of microbial communities in the independent reaction chambers, so as to form a good microbial phase separation characteristic, in different environmental conditions, each reaction unit is domesticated to be adaptive to the preponderant microbial communities in the located environment, so that the different microbial communities in the system can exert the maximum activity in the adaptive environment. A multi-phase bio-reactor is formed, thus increasing the treatment efficiency and improving the running stability. Due to parallel connection, the treatment amount of the internal-circulating fluidized bed bioreactor can be increased. A treatment mode combining series connection with parallel connection may also be adopted.

The internal-circulating fluidized bed bioreactor of the present invention has the following characteristics: (1) the three-phase separation device has a good granular sludge biocarrier intercepting performance; (2) a good hydraulic flow state is provided, and due to the adequate mixing flow state of the fluidized bed, biological sludge can be adequately mixed and contact with an inflowing matrix, thus improving the mass transfer efficiency and keeping the adequate activity of microorganisms; (3) due to the internal-circulating jet architecture in the reaction area, the backflow water amount is greatly reduced, and an excellent fine granular sludge intercepting capacity is obtained; (4) the fluidized bed is formed in the reaction chamber, the biocarriers are filled in the high-load reaction chamber, and microorganisms generate a compact bio-film structure on the surface of granular sludge or the surfaces of porous carriers, thus ensuring the maximum unit volume biomass in the reaction chamber and keeping a high bioactivity; (5) a negative pressure is formed by virtue of backflow hydraulic power to suck air, thus greatly increasing the oxygen dissolution efficiency of the aerobic treatment; (6) flexible combination and extension can be facilitated due to an anaerobic treater with a modularized architecture; and (7) reaction devices can be connected in series to form a multi-phase bio-reactor structure.

The foregoing contents are merely explanation for the present invention, rather than limiting the present invention, the scope limited by the present invention refers to claims, and any type of modifications can be made for the present invention without departing from the spirit of the present invention.

### INDUSTRIAL APPLICABILITY

The internal-circulating fluidized bed bioreactor of the present invention is capable of realizing the functions of high organic load, high treatment efficiency, impact load resistance, energy conservation, and stabilization for good effluent quality, capable of being used for anaerobic and aerobiotic treatments on organisms, and wide in application range, thus being great in market prospect and strong in industrial applicability.

## Claims

1. An internal-circulating fluidized bed bioreactor, comprising: a reactor (1), a water groove (4), at least one three-phase separator (3), a gas collection tube (17), a backflow tube (10), a backflow pump (11) and at least one circulating jet device (13), wherein the water groove (4) is installed at the upper end of the reactor (1), the water groove (4) is divided into an inner water groove (6) and an outer water groove (5), the circulating jet device (13) is installed in a reaction area (26) in the reactor (1), the circulating jet device (13) comprises an inner tube (15) and an outer tube (22) installed at the outer side of the inner tube (15) in a sleeving manner, the upper end of the outer tube (22) is connected with the inner water groove (6) and provided with a plurality of inflowing gaps (14) in the periphery thereof, the inner tube (15) is connected with the water outlet port of the backflow pump (11) by the backflow tube (10), the water inlet port of the backflow pump (11) is connected with the outer water groove (5) by the backflow tube (10), one three-phase separator (3) is installed above each circulating jet device (13), the gas separated by the three-phase separator (3) is guided in the gas collection tube (17), the separated liquid is guided in the outer water groove (5), and the separated solid is retained in the reactor (1).

2. The internal-circulating fluidized bed bioreactor of claim 1, wherein a gas inlet tube (19) is installed at the connected part of the inner tube (15) and the backflow tube (10), one end of the gas inlet tube (19) is communicated with air, the other end of the inner tube stretches into the gas inlet tube (15), and a Venturi device (18) is installed on the inner tube (15) at the other end of the gas inlet tube (19).

3. The internal-circulating fluidized bed bioreactor of claim 1 or 2, wherein the outer tube (22) is connected with the inner water groove (6) by a water inlet port connection tube (16), the aperture of the outlet of the inner tube (15) is 1/2-3/4 of the tube diameter of the inner tube (15); and the outlet of the outer tube (22) is horn-shaped.

4. The internal-circulating fluidized bed bioreactor of claim 3, wherein the inner water groove (6) is provided with a water inlet port (8), the outer water groove (5) is provided with a water outlet port (9) and a water outlet hole (7), inflowing water is drained in the inner water groove (6) from the water inlet tube (8) and then flows in the water inlet connection tube (16), the liquid separated by the three-phase separator (13) is guided in the outer water groove (5) through the water outlet hole (7) and drained out of the water groove (4) from the water outlet port (9).

5. The internal-circulating fluidized bed bioreactor of claim 4, wherein the three-phase separator (3) is composed of a conical cover (23) and at least one pair of inclined plates (24) which are mutually parallel in pairs, an angle formed between the two inclined plates (24) and a horizontal direction is basically equal to that formed between the conical cover (23) and the horizontal direction, and is 45-65 degrees, a sealed air chamber is formed at the upper end of the conical cover (23), and a gas is discharged from the gas collection tube (21) to a gas exhaust tube (17).

6. The internal-circulating fluidized bed bioreactor of claim 4, wherein the three-phase separator (3) is composed of a conical cover (23) and a plurality of inclined plates (24), an angle formed between the inclined lower end of the conical cover (23) and a horizontal direction is 45-65 degrees, the inclined plates (24) are installed in the conical cover (23) and parallel to the inclined lower end of the conical cover (23), a sealed air chamber is formed at the upper end of the conical cover (23), and a gas is discharged from a gas exhaust tube (21) to the gas collection tube (17).

7. The internal-circulating fluidized bed bioreactor of claim 5 or 6, wherein a plurality of turbulent-flow plates (20) are installed at the inner side of each inclined plate (24), an inclination angle between the turbulent-flow plates (20) and the horizontal direction is 20-30 degrees, the width of each turbulent-flow plate (20) is not greater than 2/3 of the distance between the conical cover (23) and the inclined plates (24), and the distance between every two turbulent-flow plates (20) is 1/4-1/3 of the length of each inclined plate (24).

8. The internal-circulating fluidized bed bioreactor of claim 7, wherein a gas-sealing block (2) is installed in a reactor (1) between two three-phase separators (3) or/and between one three-phase separator (3) and the wall of the reactor (1); and a flow-guiding block (12) is installed in a reactor (1) between the outlets of the two outer tubes (22) or/and between the outlet of one outer tube (22) and the wall of the reactor (1).
